# EUROPEAN PATENT APPLICATION

(11) **EP 4 711 180 A1**
(43) Date of publication of application: **18.03.2026**
(21) Application number: 25197857.3
(22) Date of filing: 25.08.2025
(51) Int. Cl.: B60L 3/00, B60L 53/62, B60L 53/66, B60L 53/68, B60L 58/12, B60L 58/16

(54) **CHARGING STATION FOR MOBILE PLATFORM**

(30) Priority: 12.09.2024 US 202418884007
(71) Applicant: The Boeing Company, Arlington, VA 22202 (US)
(72) Inventor: BERON-RAWDON, Deborah A., Arlington, 22202 (US); ATMUR, Robert J., Arlington, 22202 (US)
(74) Representative: Bugnion S.p.A. - US1

(57) **Abstract**

A battery charging station is disclosed that includes an electrical system including a charging interface, a communications system including a wireless interface, and a control system. The control system is configured to receive a charging request to initiate a battery charging operation for a battery system of a mobile platform, establish a wireless communications link with the mobile platform via the wireless interface, and receive health status data for the battery system from the mobile platform over the wireless communications link via the wireless interface. The control system is further configured to enable charging of the battery system of the mobile platform via the charging interface responsive to the health status data satisfying a first condition, and to disable charging of the battery system of the mobile platform via the charging interface responsive to the health status data satisfying a second condition indicating a fault of the battery system.

## Description

### FIELD

A disclosed invention relates generally to a charging station for charging batteries of mobile platforms.

### BACKGROUND

Charging stations can be used to charge batteries located on-board a mobile platform. For example, electric vehicles and some hybrid electric vehicles have on-board batteries that can be charged by electrical energy supplied from a charging station. **In** some examples, charging of mobile platform batteries is achieved by connecting a charging cable between the mobile platform and the charging station. Following connection of the charging cable, electrical energy can be supplied by the charging station to the mobile platform.

### SUMMARY

According a first example, a battery charging station comprises an electrical system including a charging interface; a communications system including a wireless interface; and a control system operatively coupled with the electrical system and the communications system. The control system of the charging station is configured to receive a charging request to initiate a battery charging operation for a battery system of a mobile platform, and establish a wireless communications link with the mobile platform via the wireless interface. The control system is further configured to receive health status data for the battery system from the mobile platform over the wireless communications link via the wireless interface. Responsive to the health status data satisfying a first condition, the control system is configured to enable charging of the battery system of the mobile platform via the charging interface. Responsive to the health status data satisfying a second condition indicating a fault of the battery system, the control system is configured to disable charging of the battery system of the mobile platform via the charging interface. The control system can perform one or more additional remedial operations responsive to the health status data satisfying the second condition indicating a fault of the battery system.

According to a second example, a method performed by a computing system integrated with a control system of a battery charging station comprises receiving a charging request for the battery charging station to initiate a battery charging operation for a battery system of a mobile platform, and establishing a wireless communications link between the battery charging station and the mobile platform via a wireless interface of the battery charging station. The method further comprises receiving health status data for the battery system from the mobile platform over the wireless communications link via the wireless interface of the battery charging station. The method further comprises, enabling charging of the battery system of the mobile platform via a charging interface of the battery charging station responsive to the health status data satisfying a first condition; and disabling charging of the battery system of the mobile platform via the charging interface of the battery charging station responsive to the health status data satisfying a second condition indicating a fault of the battery system.

According to a third example, a computing system for controlling operation of a battery charging station comprises a logic machine; and a data storage machine having instructions stored thereon. The instructions are executable by the logic machine to: receive a charging request to initiate a battery charging operation for a battery system of a mobile platform; establish a wireless communications link with the mobile platform via a wireless interface of the battery charging station; receive health status data for the battery system from the mobile platform over the wireless communications link via the wireless interface of the battery charging station; responsive to the health status data satisfying a first condition, enable charging of the battery system of the mobile platform via a charging interface of the battery charging station; and responsive to the health status data satisfying a second condition indicating a fault of the battery system, disable charging of the battery system of the mobile platform via the charging interface of the battery charging station.

### BRIEF DESCRIPTION OF THE DRAWINGS

FIG. 1 is a schematic diagram depicting a battery charging system that includes a battery charging station.
FIGS. 2, 3, and 4 are flow diagrams depicting an example method.
FIG. 5 is a schematic diagram depicting an example battery management system for testing a battery system that includes a plurality of battery modules.
FIG. 6 is a schematic diagram depicting additional aspects of an example module interface device of FIG. 5.
FIGS. 7 and 8 are flow diagrams depicting an example method for testing a battery system that includes a plurality of battery modules.
FIG. 9 is a schematic diagram depicted an example computing system.

### DETAILED DESCRIPTION

As briefly introduced above, a battery charging station, a method performed by a computing system integrated with a control system of a battery charging station, and a computing system for controlling operation of a battery charging station are disclosed. The disclosed battery charging station, method, and computing system can receive health status data from a mobile platform over a wireless communications link. The health status data can indicate health status of a battery system of the mobile platform. The health status data can be evaluated at or by the charging station to determine whether charging of the battery system of the mobile platform by the charging station should be enabled or disabled, prior to and during a charging operation. If the health status data indicates a fault of the battery system of the mobile platform, the charging station can perform one or more remedial operations, including disabling charging, disconnecting from the mobile platform, alerting emergency services, alerting maintenance services, and activating fire suppression, as examples.

The battery charging station, method, and computing system disclosed herein offer the potential to address various challenges or issues that exist with respect to charging batteries located on-board mobile platforms. As an example, mobile platforms can take the form of electric or hybrid electric vehicles, such as cars, trucks, buses, aircraft, scooters and motorcycles. Charging of electric and hybrid electric vehicles may cause overheating or result in combustion or damaging events if a fault exists or a fault occurs in the battery system during a charging operation. A global problem exists whereby the increasing numbers of rechargeable vehicles may place humans and property at risk when high voltage battery systems short out and progress into thermal runaway conditions. For example, the resulting arcing and fire conditions potentially present lethal hazards and could cause property damage. Presently, there are no known solutions that connect mobile platforms to the charging station in a manner that enables the charging station to respond to faults within the mobile platforms. The battery charging station, method, and computing system disclosed herein enable the charging station to perform a range of remedial operations in response to faults detected within battery systems of mobile platforms.

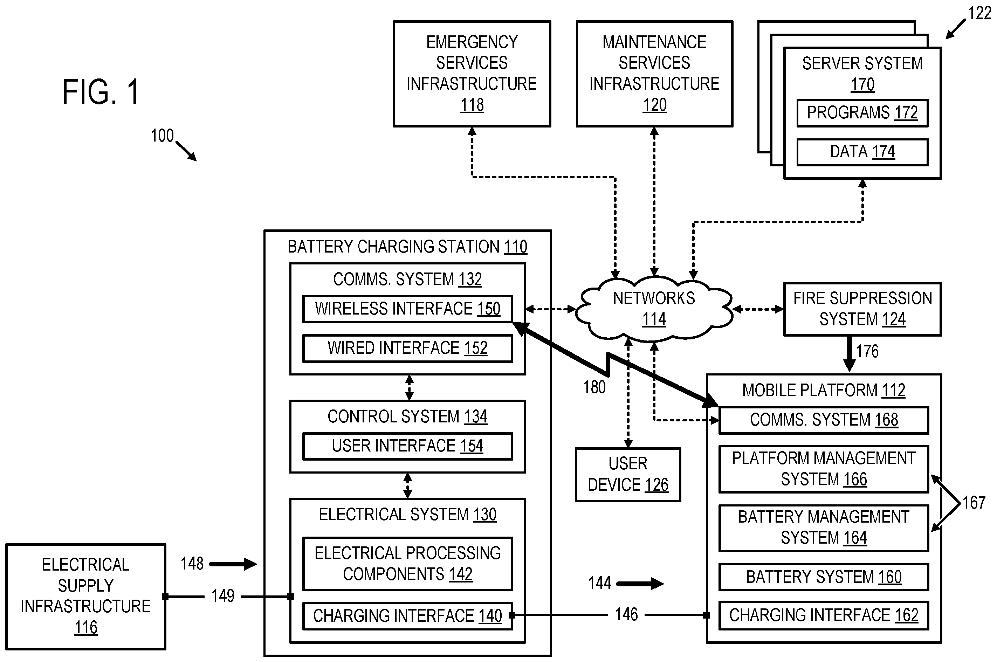

FIG. 1 is a schematic diagram depicting a battery charging system 100 that includes a battery charging station 110. Battery charging system 100 further includes one or more mobile platforms containing on-board batteries that can be charged by charging station 110. An example mobile platform 112 is depicted in FIG. 1. Mobile platform 112 can take the form of a vehicle, as an example. However, mobile platform 112 can take the form of other machines or devices.

Battery charging system 100 further includes one or more communications networks 114, electrical supply infrastructure 116, emergency services infrastructure 118, maintenance services infrastructure 120, network resources 122, fire suppression system 124, and user device 126, depicted schematically in FIG. 1.

Charging station 110 includes an electrical system 130, a communications system 132, and a control system 134. Electrical system 130 and communications system 132 are operatively coupled to control system 134, in this example. Control system 134 can control operation of electrical system 130 and communications system 132 as described herein.

Electrical system 130 includes a charging interface 140 by which electrical energy 144, depicted schematically in FIG. 1, can be supplied by charging station 110 to mobile platforms, such as mobile platform 112. As an example, electrical energy 144 can be supplied to mobile platform 112 by charging station 110 via a multi-conductor charging cable 146. Charging cable 146 can form part of charging interface 140 in some examples. In other examples, charging cable 146 can be connected to charging interface 140 via an electrical outlet or other suitable connector.

Electrical system 130 can receive electrical energy 148, depicted schematically in FIG. 1, from electrical supply infrastructure 116. As an example, electrical energy 148 can be supplied to charging station 110 by electrical supply infrastructure 116 via a multi-conductor supply cable 149. Supply cable 149 can form part of electrical system 130 in some examples. In other examples, supply cable 149 can be connected to charging interface 140 via an electrical outlet or other suitable connector.

Electrical system 130 can further include electrical processing components 142. In at least some examples, electrical energy 148 supplied by electrical supply infrastructure 116 can be processed by electrical processing components 142 to obtain electrical energy 144 in a form suitable for supplying to mobile platform 112. Processing of electrical energy 148 by electrical processing components 142 to obtain electrical energy 144 can include one or more of voltage processing (e.g., increasing, decreasing, buffering, filtering), current processing (e.g., increasing, decreasing, buffering, filtering), alternating current to direct current (AC/DC) conversion, direct current to direct current (DC/DC) conversion, as examples.

Communications system 132 includes a wireless interface 150 supporting wireless communications with remote devices over wireless communications links via one or more wireless communications protocols. Additionally or alternatively, communications system 132 includes a wired interface 152 supporting wired communications with remote devices over physical, wired communications links (e.g., copper, fiber-optics, etc.) via one or more wired communications protocols. Charging station 110 can utilize wireless interface 150 and/or wired interface 152 to communicate with mobile platform 112, emergency services infrastructure 118, maintenance services infrastructure 120, network resources 122, fire suppression system 124, and user device 126 via communications networks 114.

Control system 134 is operable to control aspects of charging station 110, including electrical system 130 and communications system 132. **In** some examples, control system 134 can include one or more computing devices that form a computing system. Control system 134 can include a user interface 154, depicted schematically in FIG. 1. User input can be received by control system 134 via user interface 154, in some examples. Furthermore, in some examples, user interface 154 can take the form of a graphical user interface (GUI) that can be displayed via a display device that is integrated with or peripheral to charging station 110. As an example, control system 134 can serve user interface 154, via wireless interface 150 or wired interface 152 over communications networks 114, to a remote device for display, such as user device 126 or mobile platform 112.

Mobile platform 112 includes a battery system 160 that includes one or more batteries. Mobile platform 112 further includes a charging interface 162 by which electrical energy 144 that is supplied by charging station 110 can be received by the mobile platform to charge the batteries of battery system 160. Mobile platform 112 can further include a battery management system 164 that controls operation of battery system 160 and charging interface 162. Mobile platform 112 can further include a communications system 168 that supports wireless communications with other devices over communications networks 114. Mobile platform 112 can further include a platform management system 166 that controls operation of the mobile platform and its various components, including components not controlled by battery management system 164. Battery management system 164 and platform management system 166 can collectively form a control system 167 of mobile platform 112. Emergency services infrastructure 118 can include devices utilized by emergency services such as fire, ambulance, and police services to receive and respond to emergency service messages that include a request for emergency services. As an example, charging station 110 can send emergency service messages to emergency service infrastructure 118 over wireless and/or wireless communications links of communications networks 114 via communications system 132. Emergency services infrastructure 118 can be remotely located from charging station 110 at an off-premises location in some examples.

Maintenance services infrastructure 120 can include devices utilized by maintenance services to receive and respond to maintenance service messages that include a request for maintenance services. As an example, charging station 110 can send maintenance service messages to maintenance service infrastructure 120 over wireless and/or wireless communications links of communications networks 114 via communications system 132. Maintenance services infrastructure 120 can be remotely located from charging station 110 at an off-premises location in some examples. Network resources 122 can include one or more server systems, an example of which is depicted in FIG. 1 as server system 170. In the example of FIG. 1, server system 170 has one or more computer executable programs 172 and other data 174 stored thereon. In some examples, network resources 122, including example server system 170 can facilitate communications between charging station 110 and mobile platforms and user devices, including example mobile platform 112 and user device 126 of FIG. 1. As an example, control system 134 of charging station 110 can request and receive one or more programs of programs 172 stored at server system 170. In this example, control system 134 can execute the program received from server system 170 as part of communicating with and interpreting data from mobile platform 112 and/or user device 126. Additionally or alternatively, in some examples, communications between charging station 110 and mobile platform 112 and/or user device 126 can traverse server system 170. Network resources 122, including server system 170 can be remotely located from charging station 110 at an off-premises location in some examples.

Fire suppression system 124 can include one or more devices operable to provide a fire suppression response 176 to a target region. Fire suppression response 176 can include a dispensed fire suppressant, such as water, other suitable liquid or gas. The target region for the fire suppression response can include a region proximate charging station 110 that is occupied by mobile platform 112 during a charging operation of battery system 160. Control system 134 can communicate with fire suppression system 124 via wireless interface 150 or wired interface 152 over communications networks 114 to request that fire suppression response 176 be provided by the fire suppression system.

User device 126 can take the form of a mobile computing device (e.g., smartphone or handheld computer) operable by a user associated with mobile platform 112. **In** some examples, user device 126 can be operated by a user to communicate with some or all of control system 134 of charging station 110, mobile platform 112, and network resources 122, including server system 170. As an example, a user can operate user device 126 to initiate and control aspects of a charging operation provided by charging station 110 to mobile platform 112. Furthermore, in some examples, user device 126 can serve as a user interface of control system 134.

Communications networks 114 can include one or more personal area networks, one or more local area networks, and one or more wide area networks (e.g., cellular networks and/or the Internet), and associated network devices that facilitate network communications. Communications networks 114 can include one or more wireless communications networks supporting communications over one or more wireless communications links using one or more wireless communications protocols. Communications networks 114 can include one or more wired communications networks supporting communications over one or more wired communications links using one or more wired communications protocols.

As examples, charging station 110 can utilize wireless interface 150 to wireless communicate with mobile platform 112 (and similarly with user device 126) over a wireless communications link 180 via a wireless personal area network utilizing a Bluetooth (TM) wireless communications protocol, via a wireless local area network utilizing a WI-FI (TM) wireless communications protocol, or via a wireless wide area network utilizing a cellular wireless communications protocol (e.g., 4G / LTE). As another example, charging station 110 can utilize communications system 132 to communicate with fire suppression system 124 via a wireless or wired communications link of communications networks 114. As additional examples, charging station 110 can utilize communications system 132 to communicate with emergency services infrastructure 118, maintenance services infrastructure 120, and network resources 122 (including server system 170) via wireless and/or wired wide area networks over communications networks 114.

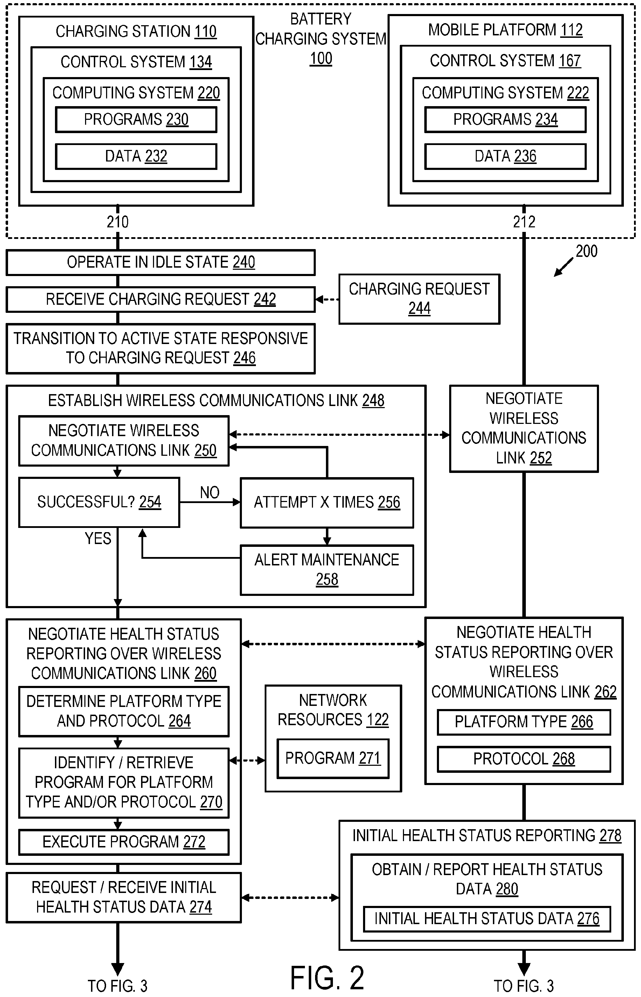

FIGS. 2, 3, and 4 are flow diagrams depicting an example method 200. Method 200 can be performed within the context of battery charging system 100 of FIG. 1, for example. Referring to FIG. 2, a process flow 210 of method 200 is performed by control system 134 of charging station 110, as previously described with reference to FIG. 1. As described in further detail herein, control system 134 of charging station 110 can include a computing system 220 that is configured to perform process flow 210 of method 200. In this example, computing system 220 have one or more programs 230 and data 232 stored thereon. The one or more programs 230 are executable by computing system 220 of charging station 110 to perform process flow 210.

Additionally, a process flow 212 of method 200 is performed by a mobile platform, such as by control system 167 of mobile platform 112 that includes battery management system 164 and platform management system 166, as previously described with reference to FIG. 1. Control system 167 of mobile platform 112 includes a computing system 222 having one or more programs 234 and data 236 stored thereon. The one or more programs 234 are executable by computing system 222 to perform process flow 212.

At 240 of process flow 210, charging station 110 is operated in an idle state. The idle state can correspond to a mode of operation of charging station 110 that is implemented while the charging station is not interacting with a mobile platform, such as mobile platform 112. Idle state can take the form of a power saving mode of operation, as an example. While operating in the idle state at 240, charging station 110 can place wireless interface 150 in a listening mode in which the charging station monitors for charging requests for mobile platforms.

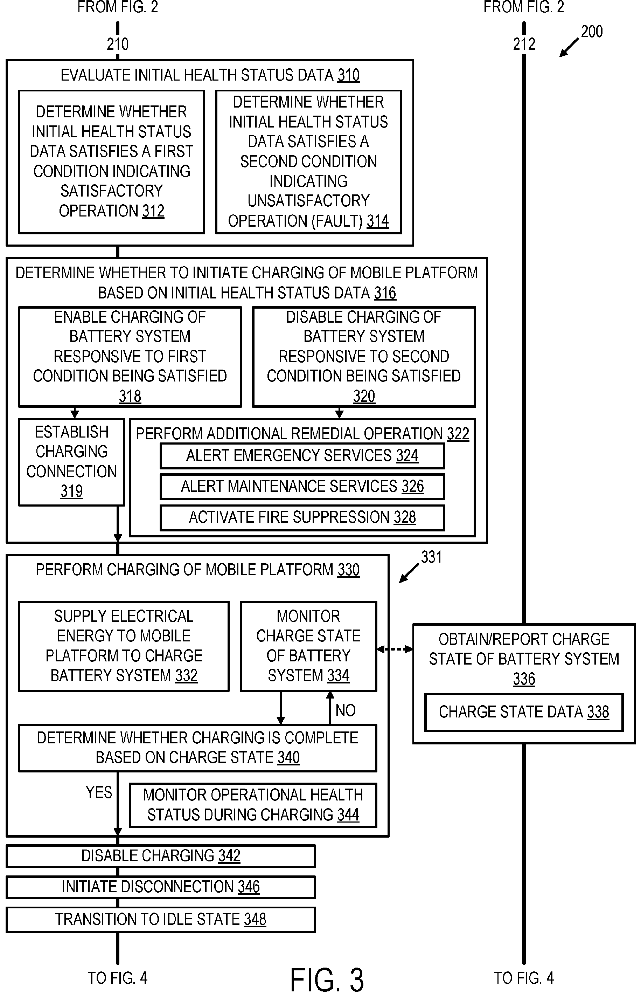

At 242 of process flow 210, charging station 110 receives a charging request 244 to initiate a battery charging operation (331 in FIG. 3) for battery system 160 of mobile platform 112. Charging request 244 can be received via user interface 154 of charging station 110 (e.g., as a user input) or via communications system 132 of charging station 110 over communications network 114 (e.g., as a message initiated by mobile platform 112 or user device 126), as examples. For example, charging request 244 can be received as a wireless communication via wireless interface 150 or as a wired communication via wired interface 152. In some examples, the charging request can include or be accompanied by a mobile platform identifier that identifies mobile platform 112.

At 246 of process flow 210, charging station 110 transitions from the idle state to an active state responsive to charging request 244 being received at 242. The active state can correspond to a mode of operation of charging station 110 that is implemented while the charging station is interacting with a mobile platform, such as mobile platform 112. As part of the active state, charging station 110 can establish wireless communications link 180 of FIG. 1 with mobile platform 112 at 248 of process flow 210.

As part of establishing wireless communications link 180 of FIG. 1 at 248, charging station 110 and mobile platform 112 can respectively negotiate the wireless communications link at 250 of process flow 210 and at 252 of process flow 212. For example, negotiating wireless communications link 180 can include charging station 110 and mobile platform 112 selecting and implementing a mutual technical feature set according to a wireless communications protocol, such as Bluetooth (TM) or WI-FI (TM). Negotiating wireless communications link 180 can include charging station 110 exchanging wireless communications with mobile platform 112 via wireless interface 150 over a personal area network or local area network of communications networks 114. Furthermore, in some examples, charging station 110 can select a wireless communications protocol to use for subsequent wireless communications with mobile platform 112 from a set of wireless communications protocols supported by both the charging station and the mobile platform. Alternatively or additionally, mobile platform 112 can select a wireless communications protocol to use for subsequent wireless communications with charging station 110 from a set of wireless communications protocols supported by both the charging station and the mobile platform.

At 254, charging station 110 determines whether wireless communications link 180 of FIG. 1 with mobile platform 112 has been successfully established. If the wireless communications link has not been successfully established ("NO" in FIG. 2), charging station 110 can attempt to establish the wireless communications link with mobile platform 112 a threshold quantity of times at 256, in which the threshold quantity represented by the term "X" in FIG. 2 can be any suitable quantity greater than or equal to 1. If the wireless communications link has not be successfully established upon the threshold quantity being reached, charging station 110 can alert maintenance services at 258 by sending a message to maintenance services infrastructure 120 via wireless interface 150 or wired interface 152 of communications system 132 over communications networks 114.

Following charging station 110 successfully establishing wireless communications link 180 of FIG. 1 with mobile platform 112 ("YES" in FIG. 2), the charging station and the mobile platform can negotiate health status reporting over the wireless communications link at 260 of process flow 210 and at 262 of process flow 212, respectively. As part of negotiating health status reporting at 260, charging station 110, at 264, can determine one or more of a platform type 266 of mobile platform 112 and a reporting protocol 268 to be used by the mobile platform to report health status. As an example, charging station 110 can send a request for platform type 266 and/or reporting protocol 268 to mobile platform 112 via the wireless communications link, and the mobile platform can respond to the request by sending one or more messages to the charging station via the wireless communications link indicating the platform type and/or the reporting protocol. In examples where mobile platform 112 provides platform type 266, charging station 110 can reference data 232 stored locally or data 236 stored remotely at network resources 122 over communications networks 114 to identify reporting protocol 268 based on platform type 266.

At 270, charging station 110 identifies a subject program for platform type 266 and/or reporting protocol 268 of mobile platform 112. If the subject program identified at 270 is present among programs 230 stored locally at charging station 110, the charging station can execute the subject program at 272. If the subject program identified at 270 is not present among programs 230, the charging station can request and receive the subject program (e.g., program 271 in FIG. 2) from network resources 122 over one or more of communications networks 114 via wireless interface 150 or wired interface 152. The program received from network resources 122 can be added to programs 230 at computing system 220, and can be executed by computing system 220 at 272.

The subject program executed by computing system 220 at 272 can be used by charging station 110 to request, receive, and interpret health status data reported by mobile platform 112 according to reporting protocol 268. For example, at 274 of process flow 210, charging station 110 can request and receive initial health status data 276 from mobile platform 112 over wireless communications link 180. Initial health status data 276 can be formatted according to reporting protocol 268. In this example, initial health status data 276 can be provided by mobile platform 112 as part of an initial health status reporting process at 278 of process flow 212. As part of initial health status reporting at 278, mobile platform 112 can obtain initial health status data 276 based, at least in part, on measurements of battery system 160 from on-board sensors, and can report the initial health status data to charging station 110 via wireless communications link 180 at 280.

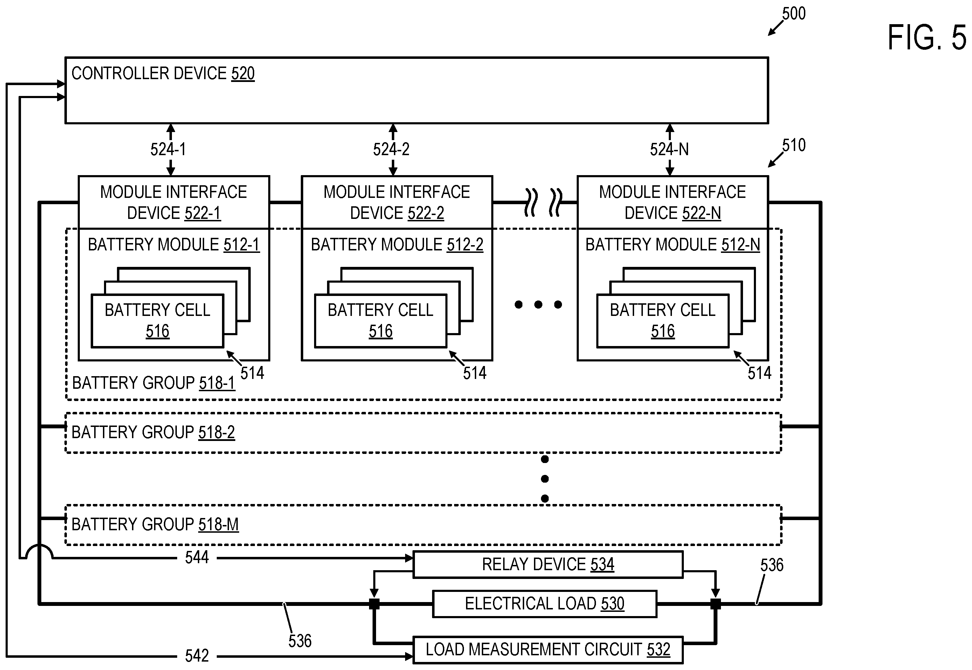

Initial health status data 276 can indicate an operating condition of battery system 160 of mobile platform 112. As an example, the operating condition of battery system 160 can include one or more of: an electrical voltage, an electrical current, an electrical power, and/or a temperature of the battery system or a battery module (a module-specific operating condition) of the battery system. Examples of operating conditions that can be measured and reported by mobile platform 112 are described in further detail with reference to FIGS. 5-8. As another example, initial health status data 276 can indicate a fault of battery system 160 that is detected by mobile platform 112, such as by the initial health status data including a fault identifier.

Referring to FIG. 3, at 310 of process flow 210, charging station 110 can evaluate initial health status data 276 received from mobile platform 112 via wireless communications link 180. As part of evaluating initial health status data 276 at 310, charging station 110 can determine at 312 whether initial health status data 276 satisfies a first condition indicating satisfactory operation of battery system 160 of mobile platform 112.

As an example, computing system 220 of charging station 110 can compare initial health status data 276 to one or more thresholds to determine whether the first condition is satisfied at 312. In this example, values of electrical voltage, electrical current, electrical power, and/or temperature of battery system 160 or a battery module (a module-specific operating condition) of the battery system identified by initial health status data 276 can be compared to one or more thresholds defined by program 271 or by other programs executed by computing system 220 within programs 230. Additionally or alternatively, the lack of faults or fault identifiers within initial health status data 276 can be evaluated by charging station 110 as satisfying the first condition at 312. The first condition evaluated at 312 can include a combination of two or more thresholds being applied to two or more of the following: electrical voltage, electrical current, electrical power, and/or temperature of battery system 160 or a battery module of the battery system, and the presence or lack of faults indicated by initial health status data 276 can be considered in combination with evaluation of the thresholds.

Additionally or alternatively, as part of evaluating initial health status data 276 at 310, charging station 110 can determine at 314 whether the initial health status data satisfies a second condition indicating unsatisfactory operation (e.g., a fault) of battery system 160 of mobile platform 112.

As an example, computing system 220 of charging station 110 can compare initial health status data 276 to one or more thresholds to determine whether the second condition is satisfied at 314. In this example, values of electrical voltage, electrical current, electrical power, and/or temperature of battery system 160 or a battery module (a module-specific operating condition) of the battery system identified by initial health status data 276 can be compared to one or more thresholds defined by program 271 or by other programs executed by computing system 220 within programs 230. Additionally or alternatively, the presence of faults or fault identifiers within initial health status data 276 can be evaluated by charging station 110 as satisfying the second condition at 314. The second condition evaluated at 314 can include a combination of two or more thresholds being applied to two or more of the following: electrical voltage, electrical current, electrical power, and/or temperature of battery system 160 or a battery module of the battery system, and the presence or lack of faults indicated by initial health status data 276 can be considered in combination with the thresholds.

In some examples, operations 310, 312, and 314 can be performed by computing system 220 executing the program (e.g., program 271) as described with reference to operation 272. For example, the program executed by computing system 220 can define the first condition and the second condition to be evaluated at 310.

At 316 of process flow 210, responsive to charging request 244, charging station 110 can determine whether to initiate charging of mobile platform 112 based on initial heath status data 276. As part of operation 316, charging station 110 can enable charging of battery system 160 of mobile platform 112 at 318 responsive to the first condition being satisfied at 312 and responsive to charging request 244. For example, at 319, charging station 110 can establish a charging connection with mobile platform 112 after enabling charging or as part of enabling charging at 318. As one example, the charging connection can be established with mobile platform 112 by charging station 110 controlling charging interface 140 to electrical conductors of charging cable 146 with electrical system 130. In some examples, by evaluating initial health status of mobile platform 112 prior to establishing the charging connection, unsatisfactory operation of the mobile platform, including unsatisfactory operation of battery system 160 can be limited, and not exacerbated due to electrical coupling with electrical system 130.

Furthermore, as part of operation 316, charging station 110 can disable charging of battery system 160 of mobile platform 112 at 320 responsive to the second condition being satisfied at 314, such as in the case of a fault of battery system 160. By disabling charging at 320, charging station 110 denies charging request 244. As charging has not yet commenced at 320, disabling charging at 320 can include charging station 110 refraining from supplying electrical energy to mobile platform 112. In some examples, disabling charging of battery system 160 prior to charging station 110 supplying electrical energy to mobile platform 112 can limit unsatisfactory operation of the mobile platform and its battery system without exacerbating issues that could otherwise arise due to supplying electrical energy.

In at least some examples, responsive to the second condition being satisfied, charging station 110 can perform one or more additional remedial operations at 322. As an example, a remedial operation performed at 322 can include charging station 110 alerting emergency services at 324 by sending a message to emergency services infrastructure 118 over communications networks 114 via wireless interface 150 or wired interface 152. Additionally or alternatively, a remedial operation performed at 322 can include charging station 110 alerting maintenance services at 326 by sending a message to maintenance services infrastructure 120 over communications networks 114 via wireless interface 150 or wired interface 152. Additionally or alternatively, a remedial operation performed at 322 can include charging station 110 activating fire suppression at 328 by sending a control message to fire suppression system 124 over communications networks 114 via wireless interface 150 or wired interface 152. Where charging is enabled at 318, charging station 110 can perform charging of battery system 160 of mobile platform 112 at 330 as part of a charging operation 331. For example, charging station 110 can supply electrical energy 144 of FIG. 1 to mobile platform 112 to charge battery system 160 at 332, as part of charging performed at 330 for charging operation 331. In the example of FIG. 1, electrical energy 144 can be supplied by charging station 110 via charging interface 140 over charging cable 146 to mobile platform 112 via charging interface 162.

Furthermore, as part of charging performed at 330, charging station 110 can monitor a charge state of battery system 160 of mobile platform 112 at 324. At 336 of process flow 212, mobile platform 112 can obtain and report charge state data 338 indicating the charge state of battery system 160 to charging station 110 via wireless communications link 180. As a first example, mobile platform 112 can periodically send charge state data 338 to charging station 110 via the wireless communications link as part of reporting the charge state at 336. As a second example, as part of monitoring performed at 334, charging station 110 can periodically request charge state data 338 from mobile platform 112 via the wireless communications link, and the mobile platform can send the charge state data to the charging station via the wireless communications link responsive to each request. As a third example, mobile platform 112 can report charge state data 338 to charging station 110 via the wireless communications link responsive to battery system 160 attaining a condition, such as a full charge or a threshold charge, which can be received by charging station 110 as part of monitoring performed at 334.

At 340, charging station 110 can determine whether charging of battery system 160 is complete based on charge state data 338 reported by mobile platform 112. If charging is not complete ("NO" in FIG. 3), monitoring of the charge state can continue at 334 and electrical energy can continue to be supplied by charging station 110 to mobile platform 332 at 332 to charge battery system 160. If charging is complete ("YES" in FIG. 3), charging station 110 can disable charging of mobile platform 112 at 342 of process flow 210. At 346 of process flow 210, charging station 110 can initiate disconnection of electrical coupling with mobile platform 112. For example, charging interface 140 of charging station 110 can be controlled to disconnect electrical conductors of charging cable 146 from electrical system 130. At 348 of process flow 210, charging station 110 can transition to the idle state by returning to operation 240 of FIG. 2.

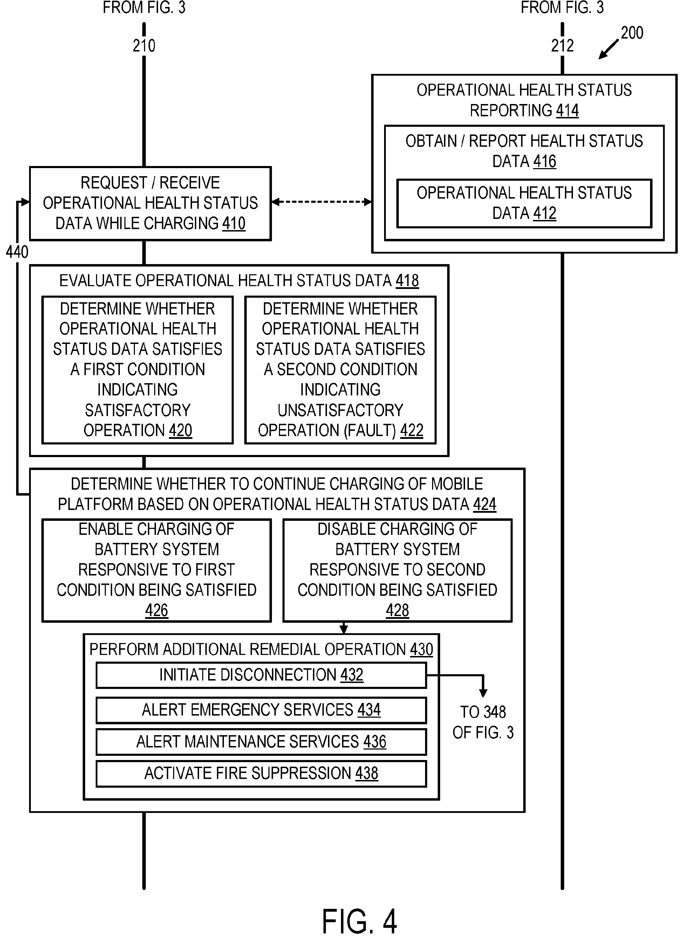

Furthermore, as part of charging of mobile platform 112 performed at 330, charging station 110 can monitor operational health status of the mobile platform at 344 during the charging process. FIG. 4 includes aspects of method 200 associated with charging station 110 monitoring operational health status of mobile platform 112 during charging as part of operation 344.

As previously described, program 271 executed by computing system 220 of charging station 110 at 272 can be used by the charging station to request, receive, and interpret health status data reported by mobile platform 112. For example, at 410 of process flow 210, charging station 110 can request and receive operational health status data 412 from mobile platform 112 over wireless communications link 180 during charging performed at 330. Operational health status data 412 can be formatted according to reporting protocol 268.

Operational health status data 412 can indicate an operating condition of battery system 160 of mobile platform 112. As an example, the operating condition of battery system 160 can include one or more of: an electrical voltage, an electrical current, an electrical power, and/or a temperature of the battery system or a battery module of the battery system. Examples of operating conditions that can be measured and reported by mobile platform 112 are described in further detail with reference to FIGS. 5-8. As another example, operational health status data 412 can indicate a fault of battery system 160 that is detected by mobile platform 112, such as by the operational health status data including a fault identifier.

In this example, operational health status data 412 is provided by mobile platform 112 as part of an operational health status reporting process at 414 of process flow 212. For example, as part of operational health status reporting at 414, mobile platform 112 can obtain operational health status data 412 based, at least in part, on measurements of battery system 160 from on-board sensors, and can report the operational health status data to charging station 110 via wireless communications link 180 at 416.

As a first example, mobile platform 112 can periodically send operational health status data 412 to charging station 110 via the wireless communications link as part of operational health status reporting 414. Charging station 110 can receive and interpret operational health status data 412 that is sent by mobile platform 112 via the wireless communications link at 410. As a second example, as part of monitoring performed at 344, charging station 110 can periodically request operational health status data 412 from mobile platform 112 during charging via the wireless communications link, and the mobile platform can send the operational health status data to the charging station via the wireless communications link responsive to each request. Charging station 110 can receive and interpret operational health status data 412 that is sent by mobile platform 112 responsive to the request, as part of monitoring performed at 344. As a third example, mobile platform 112 can report operational health status data 412 responsive to detection of a condition being satisfied during charging, which can be received by charging station 110 via the wireless communications link at 410.

At 418 of process flow 210, charging station 110 can evaluate operational health status data 412 received from mobile platform 112. As part of evaluating operational health status data 412 at 418, charging station 110 can determine at 420 whether the operational health status data satisfies a first condition indicating satisfactory operation of battery system 160 of mobile platform 112 during charging. The first condition evaluated by charging station 110 at 420 during charging can be the same as or can differ from the first condition evaluated by the charging station at 312 prior to charging of mobile platform 112. As an example, computing system 220 of charging station 110 can compare operational health status data 412 to one or more thresholds to determine whether the first condition is satisfied at 420. **In** this example, values of electrical voltage, electrical current, electrical power, and/or temperature of battery system 160 or a battery module (a module-specific operating condition) of the battery system identified by operational health status data 412 can be compared to one or more thresholds defined by program 271 or by other programs executed by computing system 220 within programs 230. Additionally or alternatively, the lack of faults or fault identifiers within operational health status data 412 can be evaluated by charging station 110 as satisfying the first condition at 420. The first condition evaluated at 420 can include a combination of two or more thresholds being applied to two or more of the following: electrical voltage, electrical current, electrical power, and/or temperature of battery system 160 or a battery module of the battery system, and the presence or lack of faults indicated by operational health status data 412 can be considered in combination with evaluation of the thresholds.

Additionally or alternatively, as part of evaluating operational health status data 412 at 418, charging station 110 can determine at 422 whether the operational health status data satisfies a second condition indicating unsatisfactory operation (e.g., a fault) of battery system 160 of mobile platform 112 during charging. The second condition evaluated by charging station 110 at 422 during charging can be the same as or can differ from the second condition evaluated by the charging station at 314 prior to charging of mobile platform 112.

As an example, computing system 220 of charging station 110 can compare operational health status data 412 to one or more thresholds to determine whether the second condition is satisfied at 422. In this example, values of electrical voltage, electrical current, electrical power, and/or temperature of battery system 160 or a battery module (a module-specific operating condition) of the battery system identified by operational health status data 412 can be compared to one or more thresholds defined by program 271 or by other programs executed by computing system 220 within programs 230. Additionally or alternatively, the presence of faults or fault identifiers within operational health status data 412 can be evaluated by charging station 110 as satisfying the second condition at 422. The second condition evaluated at 422 can include a combination of two or more thresholds being applied to two or more of the following: electrical voltage, electrical current, electrical power, and/or temperature of battery system 160 or a battery module of the battery system, and the presence or lack of faults indicated by operational health status data 412 can be considered in combination with the thresholds.

**In** some examples, operations 418, 420, and 422 can be performed by computing system 220 of charging station 110 executing program 271 as described with reference to operation 272. For example, program 271 can define the first condition and the second condition evaluated at 418.

At 424 of process flow 210, charging station 110 determines whether to continue charging of mobile platform 112 based on operational heath status data 412. As part of operation 424, charging station 110 at 426 can enable charging of battery system 160 of mobile platform 112 to continue responsive to the first condition being satisfied at 420. Furthermore, as part of operation 424, charging station 110 at 428 can disable charging of battery system 160 of mobile platform 112 at 428 responsive to the second condition being satisfied at 422, thereby discontinuing charging of the mobile platform.

In some examples, responsive to the second condition being satisfied at 422, charging station 110 can perform one or more additional remedial operations at 430. As an example, a remedial operation performed at 430 can include charging station 110 initiating disconnection of electrical coupling with mobile platform 112 at 432. For example, charging interface 140 of charging station 110 can be controlled to disconnect electrical conductors of charging cable 146 from electrical system 130. Following disconnection at 432, charging station 110 can transition to the idle state as previously described at 348 of FIG. 3. Additionally or alternatively, a remedial operation performed at 430 can include charging station 110 alerting emergency services at 434 by sending a message to emergency services infrastructure 118 over communications networks 114 via wireless interface 150 or wired interface 152. Additionally or alternatively, a remedial operation performed at 430 can include charging station 110 alerting maintenance services at 436 by sending a message to maintenance services infrastructure 120 over communications networks 114 via wireless interface 150 or wired interface 152. Additionally or alternatively, a remedial operation performed at 430 can include charging station 110 activating fire suppression at 438 by sending a control message to fire suppression system 124 over communications networks 114 via wireless interface 150 or wired interface 152. Charging station 110 can continuously or periodically perform operations 410, 418, and 424 as part of a loop 440, depicted schematically in FIG. 4. For example, as part of operation 330 of FIG. 3, charging station 110 can monitor operational status during charging at 344 in parallel with monitoring charge state at 334.

FIG. 5 is a schematic diagram depicting an example battery management system 500 for testing a battery system that includes a plurality of battery modules. Battery management system 500 is an example of battery management system 164 of mobile platform 112 of FIG. 1. In FIG. 5, an example battery system 510 includes at least a first battery module 512-1 and a second battery module 512-2. Battery system 510 can further include one or more additional battery modules, depicted in FIG. 5 as battery module 512-N, in which "N" can be any suitable quantity of battery modules. Battery system 510 is an example of battery system 160 of mobile platform 112 of FIG. 1. It will be understood that battery system 160 and battery management system 164 of mobile platform 112 can have a different configuration from the examples described with reference to FIG. 5.

Each battery module of battery system 510 includes a set of battery cells 514 that includes one or more battery cells, an example of which is depicted as battery cell 516. In at least some examples, each battery module can include a plurality of battery cells of any suitable quantity, including tens, hundreds, or more battery cells, as an example.

The plurality of battery modules of battery system 510 can be arranged in a series configuration, in a parallel configuration, or in a combination of a series configuration and a parallel configuration with respect to an electrical load 530. In the example depicted in FIG. 5, battery modules 512-1, and 512-2 through 512-N are arranged in a series configuration to form a battery group 518-1. Battery system 510 can include a plurality of battery groups arranged in a parallel configuration with respect to electrical load 530 in which each battery group includes one or more battery modules. For example, in FIG. 5, battery groups 518-2 through 518-M are depicted, in which "M" can be any suitable quantity of battery groups. In another example, battery modules 512-2 through 512-N can be included in different battery groups arranged in parallel with battery group 518-1 that includes at least battery module 512-2. For example, battery module 512-2 can form part of battery group 518-2, and battery group 512-N can form part of battery group 518-M. Accordingly, it will be understood that the plurality of battery modules of battery system 510 can include any suitable arrangement of battery modules with respect to electrical load 530.

Battery management system 500 includes a controller device 520 and a plurality of module interface devices 522-1 through 522-N that are operatively coupled to the controller device via electrical connections 524-1 through 524-N, respectively. Controller device 520 can form part of computing system 222 of FIG. 2, as an example.

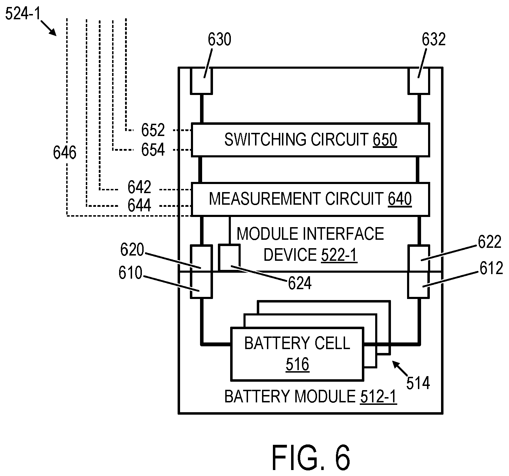

For each battery module of the plurality of battery modules of battery system 510, a respective module interface device of the plurality of module interface devices 522-1 through 512-N of battery management system 500 is operatively coupled to or is configured to be operatively coupled to anode and cathode terminals of that battery module, as described in further detail with reference to FIG. 6. Accordingly, battery management system 500 can include a module interface device for each battery module of battery system 510. In the example of FIG. 5, battery management system 500 includes a first module interface device 522-1 that is operatively coupled to anode and cathode terminals of battery module 512-1, and a second module interface device 522-2 that is operatively coupled to anode and cathode terminals of battery module 512-2. For each additional battery module of battery system 510, represented by battery module 512-N, battery management system 510 includes an additional module interface device, represented by module interface device 522-N.

As described in further detail with reference to FIG. 6, each module interface device 522-1 through 522-N of battery management system 500 includes a measurement circuit and a switching circuit. The measurement circuit of each module interface device can be used by controller device 520 to independently measure one or more operating conditions of the battery module with which that module interface device is operatively coupled. Operating conditions of battery modules are referred to herein as module-specific operating conditions, which can be measured as module-specific measurements. Examples of module-specific operating conditions that can be measured by the measurement circuit of the module interface device include an electrical voltage and an electrical current between or across the anode and cathode of the battery module.

The switching circuit of each module interface device can be used by controller device 520 to connect and disconnect the battery module with respect to electrical load 530. For example, controller device 520 can independently disconnect first battery module 512-1 from electrical load 530 and can independently connect first battery module 512-1 to electrical load 530 via the switching circuit of module interface device 522-1, and controller device 520 can independently measure one or more operating conditions of first battery module 512-1 via the measurement circuit of module interface device 522-1. As another example, controller device 520 can independently disconnect second battery module 512-2 from electrical load 530 and can independently connect second battery module 512-2 to electrical load 530 via the switching circuit of module interface device 522-2, and controller device 520 can independently measure one or more operating conditions of second battery module 512-2 via the measurement circuit of module interface device 522-2.

**In** at least some examples, electrical load 530 takes the form of a test electrical load that forms part of battery management system 500. **In** such examples, electrical load 530, as a test load, can be used to implement a test process with respect to battery system 510 prior to interfacing the battery system with another system or device that is to be powered by the battery system. In other examples, electrical load 530 can form part of another system or device that is to be powered by battery system 510 during an operational phase or state of that system or device. The test process described herein can be performed as part of a testing phase that is performed prior to, during, or after the operational phase or state of the system or device that utilizes battery system 510 as a source of electrical energy.

Battery management system 500 can further includes a load measurement circuit 532 and a relay device 534 that can be used by controller device 520 to measure operating conditions across electrical load 530 within a power delivery circuit 536. Such operating conditions are referred herein to as load-specific operating conditions that can be measured as load-specific measurements. As an example, the one or more load-specific operating conditions can include an electrical voltage and/or an electrical current between high and low sides of the electrical load.

Power delivery circuit 536, depicted schematically in FIG. 5, includes various electrical pathways that operatively couple electrical load 530 to the plurality of module interface devices 522-1 through 522-N for the delivery or transfer of electrical power, which in turn are operatively coupled with the plurality of battery modules 512-1 through 512-N according to any suitable series and/or parallel configuration. Power delivery circuit 536 can be electrically coupled to charging interface 162 of FIG. 1 to distribute electrical energy 144 to the battery modules of battery system 510 via the respective module interface devices. Relay device 534 can be used by controller device 520 in combination with load measurement circuit 532 to measure the operating conditions across electrical load 530, for example, by relay device 534 being controlled to connect or disconnect load measurement circuit 532 from power delivery circuit 536 on high and low sides of electrical load 530. Within FIG. 5, electrical pathways 542 and 544 operatively couple controller device 520 with load measurement circuit 532 and relay device 534, respectively.

FIG. 6 is a schematic diagram depicting additional aspects of the module interface devices of FIG. 5, described with reference to module interface device 522-1 operatively coupled to battery module 512-1. While module interface device 522-1 and battery module 512-1 of FIG. 6 are used to describe additional aspects of the module interface devices of FIG. 5, each module interface device of battery management system 500, including module interface devices 522-2 through 522-N can have the same configuration and components as module interface device 522-1 of FIG. 6. Similarly, each battery module that is operatively coupled to battery management system 500 of FIG. 5, including battery modules 512-2 through 512-N can have the same or similar configuration and components as battery module 512-1 of FIG. 6. However, in at least some examples, the battery modules can have a different quantity and/or performance rating (e.g., voltage and/or current) of battery cells among some or all of battery modules 512-1, and 512-2 through 512-N.

In FIG. 6, battery module 512-1 includes a cathode terminal 610 and an anode terminal 612. Each battery module of battery system 510 of FIG. 5, including battery modules 512-2 through 512-N similarly include a cathode terminal and an anode terminal.

Module interface device 522-1 includes a module-side cathode interface 620 by which the module interface device is operatively coupled or configured to be operatively coupled to cathode terminal 610 of battery module 512-1. Module interface device 522-1 includes a module-side anode interface 622 by which the module interface device is operatively coupled or configured to be operatively coupled to anode terminal 612 of battery module 512-1. Each of module interface devices 522-2 through 522-N of FIG. 5 similarly include an instance of module-side cathode interface 620 and an instance of module-side anode interface 622 by which the module interface device is operatively coupled to or configured to be operatively coupled to respective cathode and anode terminals of a respective battery module.

Module interface device 522-1 further includes an electrical load-side cathode interface 630 by which the module interface device is operatively coupled to or configured to operatively coupled to an electrical load, such as electrical load 530 of FIG. 5. During a charging operation of battery system 510, electrical load-side cathode interface 630 can be operatively coupled to charging interface 162 of FIG. 1, by which electrical energy can be received for the battery module. Module interface device 522-1 further includes an electrical load-side anode interface 632 by which the module interface device is operatively coupled to or configured to operatively coupled to an electrical load, such as electrical load 530 of FIG. 5. During a charging operation of battery system 510, electrical load-side anode interface 632 can be operatively coupled to charging interface 162 of FIG. 1, by which electrical energy can be received for the battery module. Each of module interface devices 522-2 through 522-N of FIG. 5 similarly include an instance of load-side cathode interface 630 and an instance of load-side cathode interface 632 by which the module interface device is operatively coupled to or configured to be operatively coupled to the electrical load.

Module interface device 522-1 further includes a measurement circuit 640 and a switching circuit 650, an example of which is described in further detail with reference to FIG. 4. Each of module interface devices 522-2 through 522-N of FIG. 5 similarly include an instance of measurement circuit 640 and switching circuit 650, as described in further detail herein.

Measurement circuit 640 of each module interface device is operable by controller device 520 of FIG. 5 to independently measure one or more module-specific operating conditions of the battery module to which the module interface device is operatively coupled to obtain one or more module-specific measurements. As an example, measurement circuit 640 of module interface device 522-1 is operable by controller device 520 of FIG. 5 to independently measure one or more module-specific operating conditions of battery module 512-1. An example of a module-specific operating condition includes an electrical voltage between or across cathode terminal 610 and anode terminal 612, in which case the module-specific measurement can take the form of an electrical voltage value. Another example of a module-specific operating condition includes an electrical current between or across cathode terminal 610 and anode terminal 612, in which case the module-specific measurement can take the form of an electrical current value. Controller device 520 can control measurement circuit 640 and can receive module-specific measurements from the measurement circuit via one or more of electrical connections 524-1 of FIG. 5, examples of which are schematically depicted in FIG. 6 as electrical connections 642 and 644. Controller device 520 can similarly control and receive module-specific measurements from instances of measurement circuit 640 of other module interface devices 522-2 through 522-N via one or more of electrical connections 524-2 through 524-N of FIG. 6.

**In** some examples, each module interface device can include a temperature sensor 624, as depicted schematically in FIG. 6 with reference to module interface device 522-1. Temperature sensor 624 can be used by measurement circuit 640 to measure a temperature of the battery module (as a module-specific measurement) or the battery system. Measurements of temperature obtained by temperature sensor 624 can be received by controller device 520 via one or more of electrical connections 524-1 of FIG. 5, as shown with reference to electrical connection 646 in FIG. 6. Controller device 520 can similarly receive module-specific measurements of temperature from instances of measurement circuit 640 of other module interface devices 522-2 through 522-N via one or more of electrical connections 524-2 through 524-N of FIG. 6. Temperature measured by temperature sensor 624 can be used to determine whether or not a fault is present at the battery module or within the battery system. For example, temperature exceeding a temperature threshold can be identified as a fault. Switching circuit 650 of each module interface device is operable by controller device 520 of FIG. 5 to independently connect and disconnect, with respect to the electrical load, the battery module to which that module interface device is operatively coupled to the cathode and anode terminals of that battery module. As an example, switching circuit 650 of the module interface device 522-1 is operable by controller device 520 to independently connect battery module 512-1 from a disconnected state to a connected state with respect to electrical load 530 of FIG. 5. In this example, switching circuit 650 can independently connect the battery module to the electrical load by establishing an electrical connection between cathode terminal 610 of the battery module and load-side cathode interface 630 of the module interface device, and by establishing an electrical connection between anode terminal 612 of the battery module and load-side anode interface 632 of the module interface device. As another example, switching circuit 650 of module interface device 522-1 is operable by controller device 520 to independently disconnect battery module 512-1 from a connected state to a disconnected state with respect to electrical load 530 of FIG. 5. In this example, switching circuit 650 can independently disconnect the battery module from the electrical load by decoupling an electrical connection between cathode terminal 610 of the battery module and load-side cathode interface 630 of the module interface device, and by decoupling an electrical connection between anode terminal 612 of the battery module and load-side anode interface 632 of the module interface device. Controller device 520 can control switching circuit 650 of module interface device 522-1 via one or more of electrical connections 524-1 of FIG. 5, examples of which are schematically depicted in FIG. 6 as electrical connections 652 and 654. Controller device 520 can similarly control instances of switching circuit 650 of other module interface devices 522-2 through 522-N via one or more of electrical connections 524-2 through 524-N of FIG. 6.

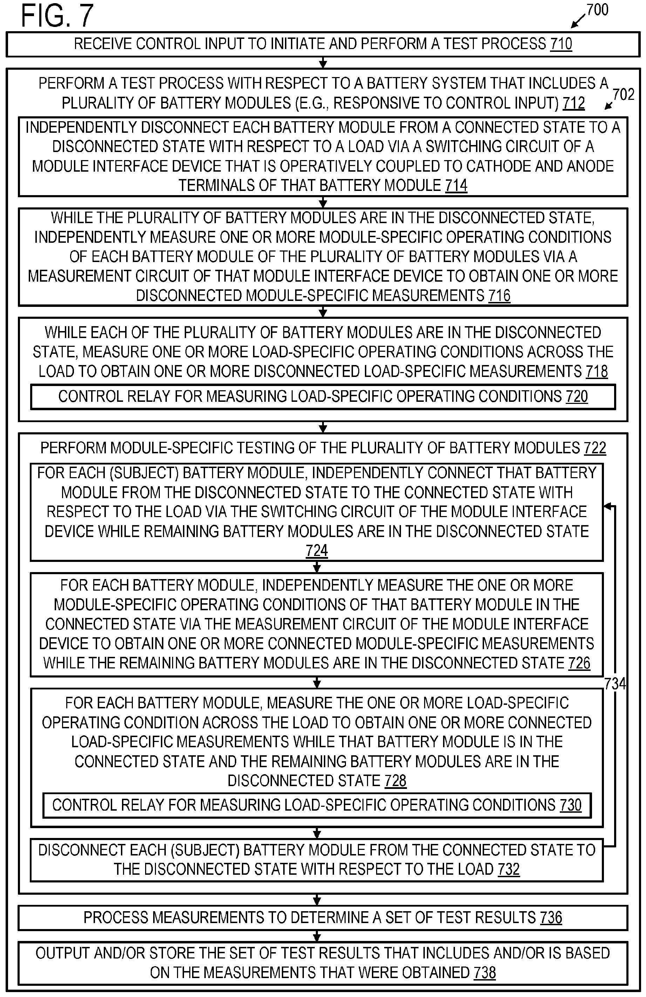

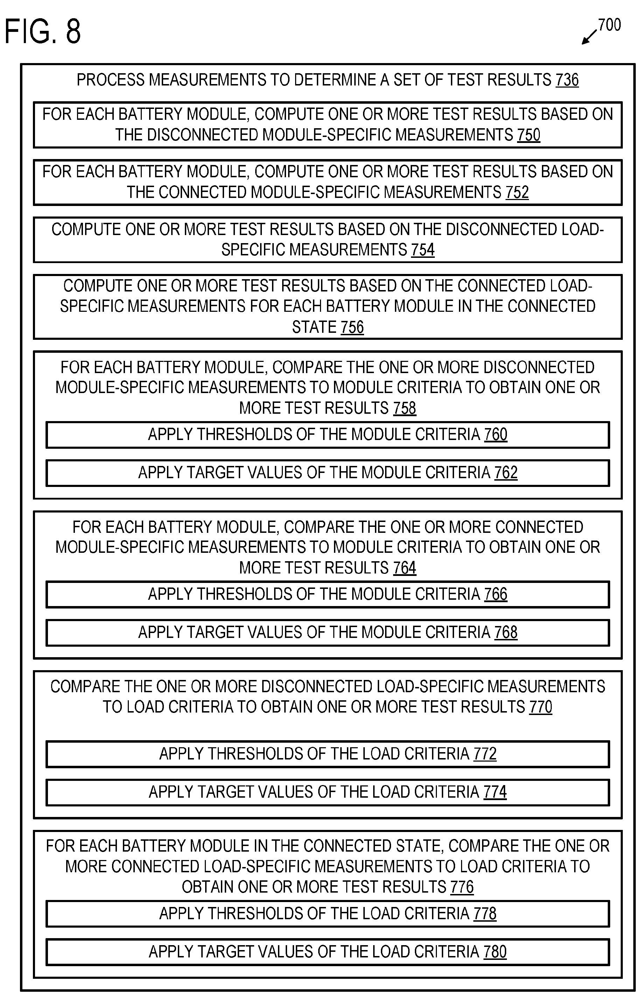

FIGS. 7 and 8 are flow diagram depicting an example method 700 for testing a battery system that includes a plurality of battery modules. Battery system 510 of FIG. 5 is an example of a battery system that can be tested by performing method 700. As an example, method 700 for testing the battery system can be performed via battery management system 500 of FIG. 5, which includes controller device 520 and, for each battery module of the plurality of battery modules, a respective module interface device that is operatively coupled to anode and cathode terminals of that battery module. For example, method 700 and the various operations of the method for testing the battery system can be performed by controller device 520 of FIG. 5.

Referring to FIG. 7, at 710, the method includes receiving a control input initiate and perform a test process. As an example, a user can provide a control input via a user interface that is received by the controller device of the battery management system. The test process can be initiated and performed by the controller device responsive to the control input.

At 712, the method includes performing the test process 702 with respect to the battery system. As previously described, the test process 702 can be performed at or by the controller device (e.g., 510 of FIG. 5) of the battery management system.

At 714, the method includes independently disconnecting each battery module of the plurality of battery modules from a connected state to a disconnected state with respect to an electrical load via a switching circuit of the module interface device that is operatively coupled to the cathode and anode terminals of that battery module. As an example, the switching circuit can refer to switching circuit 650 of FIG. 6.

At 716, the method includes, while the plurality of battery modules are in the disconnected state, independently measuring one or more module-specific operating conditions of each battery module of the plurality of battery modules via a measurement circuit of the module interface device that is operatively coupled to the cathode and anode terminals of that battery module to obtain one or more module-specific measurements for each module-specific operating condition. As an example, the measurement circuit can refer to measurement circuit 640 of FIG. 6. Module-specific measurements that are obtained for a battery module that is in a disconnected state can be referred to as disconnected module-specific measurements. Examples of module-specific operating conditions include an electrical voltage and an electrical current measured between or across cathode and anode terminals of the battery module. In at least some examples, the one or more module-specific measurements obtained at 716 for each battery module in the connected state can include a plurality of measurements obtained for the module-specific operating condition(s) over a period of time.

At 718, the method includes, while each (all) of the plurality of battery modules are in the disconnected state, measuring one or more load-specific operating conditions across the electrical load to obtain one or more load-specific measurements for each load-specific operating condition. Load-specific measurements that are obtained while the plurality of battery modules are in the disconnected state can be referred to as disconnected load-specific measurements. Examples of load-specific operating conditions include an electrical voltage and an electrical current measured across the electrical load. In at least some examples, the one or more load-specific measurements obtained at 718 while the plurality of battery modules are in the disconnected state can include a plurality of measurements obtained for the load-specific operating condition(s) over a period of time.

As part of operation 718, the method at 720 can further include controlling a relay device (e.g., 534 of FIG. 5) of the battery management system for measuring the load-specific operation condition. For example, the relay device can be controlled by the controller device to operatively couple a load measurement circuit (e.g., 532 of FIG.5) and/or a test load (e.g., 530 of FIG. 5) as part of the test process.

At 722, the method includes performing module-specific testing of the plurality of battery modules of the battery system. As part of module-specific testing performed at 722, each battery module of the plurality of battery modules can be independently connected with respect to the electrical load for testing while the remaining battery modules of the plurality of battery modules are in the disconnected state. A battery module for which module-specific testing is performed at operation 722 can be referred to as a subject battery module. As subsequently described, operations 724 - 734 can be performed for each subject battery module of the plurality of battery modules as part of module-specific testing performed at 722.

At 724, the method includes, for each battery module of the plurality of battery modules, independently connecting that battery module from the disconnected state to the connected state with respect to the electrical load via the switching circuit of the module interface device that is operatively coupled to the cathode and anode terminals of that battery module while remaining battery modules of the plurality of battery modules are in the disconnected state. For example, the controller device can command the switching circuit of the module interface of the subject battery module to connect the battery module to the electrical load. The battery module that is connected at 724 while the remaining batteries are in the disconnected state can be referred to as the subject battery module.

At 726, the method includes, for each battery module of the plurality of battery modules, independently measuring the one or more module-specific operating conditions of that battery module in the connected state via the measurement circuit of the module interface device that is operatively coupled to the cathode and anode terminals of that battery module to obtain one or more module-specific measurements while the remaining battery modules are in the disconnected state. For example, the controller device can obtain one or more module-specific measurements of each module-specific operating condition for the subject battery module via the measurement circuit. Module-specific measurements that are obtained for a subject battery module that is in the connected state can be referred to as connected module-specific measurements. As previously described, examples of module-specific operating conditions include an electrical voltage and an electrical current measured between or across cathode and anode terminals of the battery module. In at least some examples, the one or more module-specific measurements obtained at 726 for each battery module in the connected state can include a plurality of measurements obtained for the module-specific operating condition(s) over a period of time.

At 728, the method includes, for each battery module of the plurality of battery modules of the battery system, measuring the one or more load-specific operating conditions across the electrical load to obtain one or more load-specific measurements while that battery module is in the connected state and the remaining battery modules are in the disconnected state. Load-specific measurements that are obtained while a battery module is in the connected state can be referred to as connected load-specific measurements. As previously described, examples of load-specific operating conditions include an electrical voltage and an electrical current measured across the electrical load. As part of operation 728, the method at 730 can include controlling a relay device (e.g., 534 of FIG. 5) for measuring the load-specific operating conditions. For example, the controller device can obtain the load-specific measurement via a load measurement circuit (e.g., 532 of FIG. 5) associated with the relay device, as previously described with reference to operation 720. In at least some examples, the one or more load-specific measurements obtained at 728 for each battery module in the connected state can include a plurality of measurements obtained for the load-specific operating condition over a period of time.

At 732, the method includes disconnecting each battery module of the plurality of battery modules from the connected state to the disconnected state with respect to the electrical load. For example, the controller device can disconnect the subject battery module for which module-specific testing was performed at 722 via the switching circuit of the module interface device operatively coupled to the subject battery module.

As depicted schematically at 734, module specific-testing can be performed for each battery module of the plurality of battery modules by repeating operations 724-732 for another battery module as the subject battery module.

At 736, the method includes processing the measurements obtained at operations 716, 718, 726, and 728 to determine a set of test results. The set of test results can form part of data reported by mobile platform 112 to charging station 110 as described with reference to method 200 of FIGS. 2-4. For example, the set of test results can form part of initial health status data 276 and operational health status data 412.

At 750, the method can include, for each battery module of the plurality of battery modules, computing one or more test results based on the disconnected module-specific measurements obtained at operation 716. As an example, where the disconnected module-specific measurements include measurements of electrical voltage and electrical current, the test results computed at 750 can include a power of each battery module in the disconnected state that is based on the measurements of electrical voltage and electrical current. Additionally or alternatively, the test results computed at 750 can include a rate of change of electrical voltage, electrical current, or power measured over time.

At 752, the method can include, for each battery module of the plurality of battery modules, computing one or more test results based on the connected module-specific measurements obtained at operation 726. As an example, where the connected module-specific measurements include measurements of electrical voltage and electrical current, the test results computed at 752 can include a power of each battery module in the connected state that is based on the measurements of electrical voltage and electrical current obtained while the remaining battery modules are in the disconnected state. Additionally or alternatively, the test results computed at 752 can include a rate of change of electrical voltage, electrical current, or power measured over time.

At 754, the method can include computing one or more test results based on the disconnected load-specific measurements obtained at operation 718 while the plurality of battery modules were in the disconnected state. As an example, where the disconnected load-specific measurements include measurements of electrical voltage and electrical current, the test results computed at 754 can include a power delivered to the load while the plurality of battery modules were in the disconnected state that is based on the measurements of electrical voltage and electrical current. Additionally or alternatively, the test results computed at 754 can include a rate of change of electrical voltage, electrical current, or power measured over time.

At 756, the method can include computing one or more test results based on the connected load-specific measurements obtained at operation 728 for each battery module in the connected state while the plurality of battery modules were in the disconnected state. As an example, where the connected load-specific measurements include measurements of electrical voltage and electrical current, the test results computed at 756 can include a power delivered to the load while the subject battery module was in the connected state that is based on the measurements of electrical voltage and electrical current. Additionally or alternatively, the test results computed at 756 can include a rate of change of electrical voltage, electrical current, or power measured over time.

At 758, the method can include, for each battery module of the plurality of battery modules, comparing the one or more disconnected module-specific measurements obtained at 716 and/or the one or more test results computed at 750 to module criteria to obtain one or more test results. The module criteria can define one or more thresholds and/or one or more target values for each module-specific operating condition that is measured at 716 and/or test results computed at 750. As an example, the comparisons performed at 758 can include applying one or more thresholds at 760 and/or applying one or more target values at 762 of the module criteria to the one or more disconnected module-specific measurements of each battery module measured at 716 and/or test results obtained at 750 to obtain one or more test results for that battery module. The one or more thresholds and/or one or more target values can delineate an acceptable operating range or value from an unacceptable operating range or value. The test results obtained at 758 can include an indication of whether the one or more disconnected module-specific measurements obtained at 716 and/or the test results obtained at 750 for each battery module meets the module criteria - e.g., whether the one or more measurements are at or within the acceptable operating range or value.

At 764, the method can include, for each battery module of the plurality of battery modules, comparing the one or more connected module-specific measurements obtained at 726 and/or the one or more test results computed at 752 to module criteria to obtain one or more test results. As an example, the comparisons performed at 764 can include applying one or more thresholds at 766 and/or applying one or more target values at 768 of the module criteria to the one or more connected module-specific measurements of each battery module measured at 726 and/or test results obtained at 752 to obtain one or more test results for that battery module. As previously described, the one or more thresholds and/or one or more target values can delineate an acceptable operating range or value from an unacceptable operating range or value. The test results obtained at 764 can include an indication of whether the one or more connected module-specific measurements obtained at 726 and/or the test results obtained at 752 for each battery module meets the module criteria - e.g., whether the one or more measurements are at or within the acceptable operating range or value.

At 770, the method can include comparing the one or more disconnected load-specific measurements obtained at 718 and/or the one or more test results computed at 754 to load criteria to obtain one or more test results. The load criteria can define one or more thresholds and/or one or more target values for each load-specific operating condition that is measured at 718 and/or test results computed at 754. As an example, the comparisons performed at 770 can include applying one or more thresholds at 772 and/or applying one or more target values at 774 of the load criteria to the one or more disconnected load-specific measurements measured at 718 and/or test results calculated at 754 to obtain one or more test results. The one or more thresholds and/or one or more target values can delineate an acceptable operating range or value from an unacceptable operating range or value, thereby indicating whether or not a fault is present. The test results obtained at 770 can include an indication of whether the one or more disconnected load-specific measurements obtained at 718 and/or the test results obtained at 754 meets the load criteria - e.g., whether the one or more measurements are at or within the acceptable operating range or value, indicating whether or not a fault is present.

At 776, the method can include, for each battery module in the connected state while the remaining battery modules are in the disconnected state, comparing the one or more connected load-specific measurements obtained at 728 and/or the one or more test results computed at 756 to load criteria to obtain one or more test results. As previously described, the load criteria can define one or more thresholds and/or one or more target values for each load-specific operating condition that is measured at 728 and/or test results computed at 756. As an example, the comparisons performed at 776 can include applying one or more thresholds at 778 and/or applying one or more target values at 780 of the load criteria to the one or more connected load-specific measurements measured at 728 and/or test results calculated at 756 to obtain one or more test results. As previously described, the one or more thresholds and/or one or more target values can delineate an acceptable operating range or value from an unacceptable operating range or value, thereby indicating whether or not a fault is present. The test results obtained at 776 can include an indication of whether the one or more connected load-specific measurements obtained at 728 and/or the test results obtained at 756 meets the load criteria - e.g., whether the one or more measurements are at or within the acceptable operating range or value, indicating whether or not a fault is present.

Referring again to FIG. 7, at 738, the method includes outputting and/or storing the set of test results that includes and/or is based on one or more of the measurements that were obtained by method 700, including some or all of the test results determined at operation 736. For example, the set of test results can include the measurements obtained at 716, 718, 726, and 728 of method 700. Additionally or alternatively, as an example, the set of test results output and/or stored at 738 can be based on one or more of: (1) the module-specific measurements (connected module-specific measurements) obtained for each battery module of the plurality of battery modules obtained while that battery module is in the connected state and the remaining battery modules are in the disconnected state, (2) the load-specific measurements (connected load-specific measurements) for each battery module of the plurality of battery modules obtained while that battery module is in the connected state and the remaining battery modules are in the disconnected state, (3) load-specific measurements (disconnected load-specific measurements) obtained while each of the plurality of battery modules is in the disconnected state, and (4) module-specific measurements (disconnected module-specific measurements) obtained for each battery module while each of the plurality of battery modules is in the disconnected state. In at least some examples, the set of test results output at 738 can be included in initial health status data 276 and operational health status data 412 that is reported to a charging station or other remote device, as previously described with reference to FIGS. 2-4.

Accordingly, in an example implementation of method 700, the load-specific operating condition includes an electrical voltage or an electrical current, and the load criteria compared to the disconnected load-specific measurements includes a target value of zero voltage or zero current. As another example, the module criteria includes a target value of zero voltage or zero current when disconnected from the load, and the set of test results indicates whether the module-specific measurement is zero voltage or zero current. As another example, the set of test results includes an indication whether, for each battery module of the set of battery modules, the module-specific measurement obtained for that battery module matches the load-specific measurement obtained while that battery module is in the connected state and the remaining battery modules are in the disconnected state. For example, the set of test results includes an indication whether an electrical current or an electrical voltage of a battery module is within an acceptable operating range as defined by one or more thresholds. As another example, the set of test results includes an indication whether a rate of change of an electrical current or an electrical voltage of a battery module is within an acceptable operating range as defined by one or more thresholds.

In some examples, the methods, processes, and operations described herein can be tied to a computing system of one or more computing devices. In particular, such methods, processes, and operations can be implemented as a computer program, a computer-application program or service, an application-programming interface (API), a library, and/or other computer-program product.

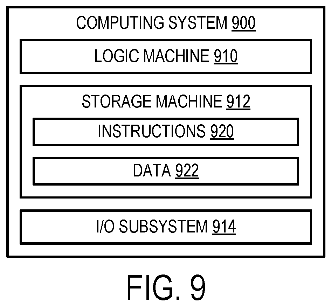

FIG. 9 schematically shows an example of a computing system 900 that can enact the methods, processes, and operations described herein. Computing system 900 is shown in FIG. 9 in simplified form. Computing system 220 of charging station 110 and computing system 222 of mobile platform 112 are each examples of computing system 900 of FIG. 9.

Computing system 900 includes a logic machine 910 and a storage machine 912. Computing system 900 can further include an input/output subsystem 914 by which the computing system can communicate with other devices.

Logic machine 910 includes one or more physical devices configured to execute instructions. For example, the logic machine can be configured to execute instructions that are part of one or more applications, services, programs, routines, libraries, objects, components, data structures, or other logical constructs. Such instructions can be implemented to perform a task, implement a data type, transform the state of one or more components, achieve a technical effect, or otherwise arrive at a desired result. The logic machine can include one or more processors configured to execute software instructions, such as instructions 920 stored in storage machine 912. Additionally or alternatively, the logic machine can include one or more hardware or firmware logic machines configured to execute hardware or firmware instructions, such as instructions 920 stored in storage machine 912. Processors of the logic machine can be single-core or multi-core, and the instructions executed thereon can be configured for sequential, parallel, and/or distributed processing. Individual components of the logic machine optionally can be distributed among two or more separate devices, which can be remotely located and/or configured for coordinated processing. Aspects of the logic machine can be virtualized and executed by remotely accessible, networked computing devices configured in a cloud-computing configuration. Storage machine 912 includes one or more physical devices configured to hold instructions, such as instructions 920 and other data 922 executable by the logic machine to implement the methods, processes, and operations described herein. When such methods, processes, and operations are implemented, the state of storage machine 912 can be transformed-e.g., to hold different data. Programs 230, 234, and 271 of FIG. 2 are examples of instructions 920 of FIG. 9. Data 232 and 236 of FIG. 2 are examples of data 922 of FIG. 9.

Storage machine 912 can include removable and/or built-in devices. Storage machine 912 can include optical memory, semiconductor memory (e.g., RAM, EPROM, EEPROM, etc.), and/or magnetic memory (e.g., hard-disk drive, floppy-disk drive, tape drive, MRAM, etc.), among others. Storage machine 912 can include volatile, nonvolatile, dynamic, static, read/write, read-only, random-access, sequential-access, location-addressable, file-addressable, and/or content-addressable devices.

It will be appreciated that storage machine 912 includes one or more physical devices. However, aspects of the instructions described herein alternatively can be propagated by a communication medium (e.g., an electromagnetic signal, an optical signal, etc.) that is not held by a physical device for a finite duration.

Aspects of logic machine 910 and storage machine 912 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" can be used to describe an aspect of computing system 900 implemented to perform a particular function. In some cases, a module, program, or engine can be instantiated via logic machine 910 executing instructions held by storage machine 912. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

Input/output subsystem 914 can include a display subsystem in some examples, When included, the display subsystem can be used to present a visual representation of instructions 920 and/or data 922 held by storage machine 912. This visual representation can take the form of a graphical user interface (GUI). As the herein described methods and processes change the data held by the storage machine, and thus transform the state of the storage machine, the state of the display subsystem can likewise be transformed to visually represent changes in the underlying data. The display subsystem can include one or more display devices utilizing virtually any type of technology. Such display devices can be combined with logic machine 910 and/or storage machine 912 in a shared enclosure, or such display devices can be peripheral display devices.

Further, the disclosure comprises configurations according to the following Examples. Example 1. A battery charging station, comprising: an electrical system including a charging interface; a communications system including a wireless interface; and a control system operatively coupled with the electrical system and the communications system; wherein the control system is configured to: receive a charging request to initiate a battery charging operation for a battery system of a mobile platform; establish a wireless communications link with the mobile platform via the wireless interface; receive health status data for the battery system from the mobile platform over the wireless communications link via the wireless interface; responsive to the health status data satisfying a first condition, enable charging of the battery system of the mobile platform via the charging interface; and responsive to the health status data satisfying a second condition indicating a fault of the battery system, disable charging of the battery system of the mobile platform via the charging interface.

Example 2. The battery charging station of Example 1, wherein the control system is further configured to: responsive to the health status data satisfying the second condition indicating the fault of the battery system, perform an additional remedial operation.

Example 3. The battery charging station of Example 2, wherein the additional remedial operation includes sending a message to emergency services infrastructure over a communications network.

Example 4. The battery charging station of Example 2, wherein the additional remedial operation includes sending a message to maintenance services infrastructure over a communications network.

Example 5. The battery charging station of Example 2, wherein the additional remedial operation includes activating a fire suppression system.

Example 6. The battery charging station of any of Examples 1-5, wherein the health status data for the battery system includes initial health status data received prior to initiating charging of the battery system of the mobile platform via the charging interface; and wherein the control system is configured to enable charging of the battery system of the mobile platform via the charging interface responsive to the initial health status data satisfying the first condition by initiating charging of the battery system responsive to the charging request.

Example 7. The battery charging station of Example 6, wherein the control system is configured to disable charging of the battery system of the mobile platform via the charging interface responsive to the initial health status data satisfying the second condition.

Example 8. The battery charging station of any of Examples 1-7, wherein the health status data for the battery system includes operational health status data received while charging the battery system of the mobile platform via the charging interface; and wherein the control system is configured to enable charging of the battery system of the mobile platform via the charging interface responsive to the operational health status data satisfying the first condition by continuing charging of the battery system via the charging interface.

Example 9. The battery charging station of Example 8, wherein the control system is configured to disable charging of the battery system of the mobile platform via the charging interface responsive to the operational health status data satisfying the second condition by discontinuing charging of the battery system via the charging interface.

Example 10. The battery charging station of any of Examples 1-9, wherein the health status data indicates an operating condition of the battery system; wherein the operating condition of the battery system includes one or more of: an electrical voltage, an electrical current, an electrical power, and/or a temperature of the battery system.

Example 11. The battery charging station of any of Examples 1-10, wherein the health status data indicates a module-specific operating condition of a subject battery module of the battery system that contains a plurality of battery modules; wherein the module-specific operating condition of the battery system includes one or more of: an electrical voltage, an electrical current, an electrical power, and/or a temperature of the subject battery module.

Example 12. The battery charging station of Example 11, wherein the first condition is a first module-specific condition associated with the subject battery module; and wherein the second condition is a second module-specific condition associated with the subject battery module.

Example 13. The battery charging station of any of Examples 1-12, wherein the control system is further configured to: determine one or more of a platform type of the mobile platform and/or a protocol associated with reporting of the health status data by the mobile platform based communications data received from the mobile platform over the wireless communications link via the wireless interface; and retrieve and execute a subject program from a plurality of available programs based on the platform type and/or the protocol; wherein the first condition and the second condition are defined by the subject program.

Example 14. A method performed by a computing system integrated with a control system of a battery charging station, the method comprising: receiving a charging request for the battery charging station to initiate a battery charging operation for a battery system of a mobile platform; establishing a wireless communications link between the battery charging station and the mobile platform via a wireless interface of the battery charging station; receiving health status data for the battery system from the mobile platform over the wireless communications link via the wireless interface of the battery charging station; responsive to the health status data satisfying a first condition, enabling charging of the battery system of the mobile platform via a charging interface of the battery charging station; and responsive to the health status data satisfying a second condition indicating a fault of the battery system, disabling charging of the battery system of the mobile platform via the charging interface of the battery charging station.

Example 15. The method of Example 14, further comprising: responsive to the health status data satisfying the second condition indicating the fault of the battery system, performing one or more additional remedial operations that include: sending a message to emergency services infrastructure over a communications network; sending a message to maintenance services infrastructure over a communications network; and/or activating a fire suppression system.

Example 16. The method of any of Examples 14-15, wherein the health status data for the battery system includes initial health status data received prior to initiating charging of the battery system of the mobile platform via the charging interface; and wherein the method further comprises: enabling charging of the battery system of the mobile platform via the charging interface responsive to the health status data satisfying the first condition by initiating charging of the battery system responsive to the charging request; and disabling charging of the battery system of the mobile platform via the charging interface responsive to the health status data satisfying the second condition by denying the charging request.

Example 17. The method of any of Examples 14-16, wherein the health status data for the battery system includes operational health status data received while charging the battery system of the mobile platform via the charging interface; and wherein the method further comprises: enabling charging of the battery system of the mobile platform via the charging interface responsive to the health status data satisfying the first condition by continuing charging of the battery system via the charging interface; and disabling charging of the battery system of the mobile platform via the charging interface responsive to the health status data satisfying the second condition by discontinuing charging of the battery system via the charging interface.

Example 18. The method of any of Examples 14-17, wherein the health status data indicates a module-specific operating condition of a subject battery module of the battery system that contains a plurality of battery modules; wherein the module-specific operating condition of the battery system includes one or more of: an electrical voltage, an electrical current, an electrical power, and/or a temperature of the subject battery module; wherein the first condition is a first module-specific condition associated with the subject battery module; and wherein the second condition is a second module-specific condition associated with the subject battery module.

Example 19. The method of any of Examples 14-18, further comprising: determining one or more of a platform type of the mobile platform and/or a protocol associated with reporting of the health status data by the mobile platform based communications data received from the mobile platform over the wireless communications link via the wireless interface; and retrieving and executing a subject program from a plurality of available programs based on the platform type and/or the protocol; wherein the first condition and the second condition are defined by the subject program.

Example 20. A computing system for controlling operation of a battery charging station, the computing system comprising: a logic machine; a data storage machine having instructions stored thereon executable by the logic machine to: receive a charging request to initiate a battery charging operation for a battery system of a mobile platform; establish a wireless communications link with the mobile platform via a wireless interface of the battery charging station; receive health status data for the battery system from the mobile platform over the wireless communications link via the wireless interface of the battery charging station; responsive to the health status data satisfying a first condition, enable charging of the battery system of the mobile platform via a charging interface of the battery charging station; and responsive to the health status data satisfying a second condition indicating a fault of the battery system, disable charging of the battery system of the mobile platform via the charging interface of the battery charging station.

It will be understood that the configurations and/or approaches described herein are exemplary in nature, and that these specific embodiments or examples are not to be considered in a limiting sense, because numerous variations are possible. The specific methods, processes, and operations described herein can represent one or more of any number of processing strategies. As such, various acts illustrated and/or described can be performed in the sequence illustrated and/or described, in other sequences, in parallel, or omitted. Likewise, the order of the above-described processing strategies can be changed.

The subject matter of the present disclosure includes all novel and non-obvious combinations and sub-combinations of the various methods, processes, operations, systems, configurations, and other features, functions, acts, and properties disclosed herein, as well as any and all equivalents thereof.

## Claims

1. A battery charging station (110) for charging a battery system (160) of a mobile platform (112), the battery charging station (110) comprising:
an electrical system (130) including a charging interface (140);
a communications system (132) including a wireless interface (150); and
a control system (134) operatively coupled with the electrical system (130) and the communications system (132);
wherein the control system (134) is configured to:
receive a charging request (244) to initiate a battery charging operation (331) for the battery system (160);
establish a wireless communications link (180) with the mobile platform (112) via the wireless interface (150);
receive health status data (276, 412) for the battery system (160) from the mobile platform (112) over the wireless communications link (180) via the wireless interface (150);
responsive to the health status data (276, 412) satisfying a first condition (318, 426), enable charging of the battery system (160) of the mobile platform (112) via the charging interface (140); and
responsive to the health status data (276, 412) satisfying a second condition (320, 428) indicating a fault of the battery system (160), disable charging of the battery system (160) of the mobile platform (112) via the charging interface (140).

2. The battery charging station (110) of claim 1, wherein the control system (134) is further configured to:
responsive to the health status data (276, 412) satisfying the second condition (320, 428) indicating the fault of the battery system (160), perform an additional remedial operation (324, 326, 328).

3. The battery charging station (110) of claim 2, wherein the additional remedial operation (324, 326, 328) includes:
- sending a message (324) to emergency services infrastructure (118) over a communications network (114); or
- sending a message (326) to maintenance services infrastructure (120) over the communications network (114); or
- activating a fire suppression system (124).

4. The battery charging station (110) of any one of the preceding claims, wherein the health status data (276, 412) for the battery system (160) includes initial health status data (276) received prior to initiating charging of the battery system (160) of the mobile platform (112) via the charging interface (140); and
wherein the control system (134) is configured to:
enable charging of the battery system (160) of the mobile platform (112) via the charging interface (140) responsive to the initial health status data (276) satisfying the first condition (318, 426) by initiating charging of the battery system (160) responsive to the charging request (244); and
disable charging of the battery system (160) of the mobile platform (112) via the charging interface (140) responsive to the initial health status data (276) satisfying the second condition (320, 428).

5. The battery charging station (110) of any one of the precding claims, wherein the health status data (276, 412) for the battery system (160) includes operational health status data (412) received while charging the battery system (160) of the mobile platform (112) via the charging interface (140); and
wherein the control system (134) is configured to:
enable charging of the battery system (160) of the mobile platform (112) via the charging interface (140) responsive to the operational health status data (412) satisfying the first condition (318, 426) by continuing charging of the battery system (160) via the charging interface (140); and
disable charging of the battery system (160) of the mobile platform (112) via the charging interface (140) responsive to the operational health status data (412) satisfying the second condition (320, 428) by discontinuing charging of the battery system (160) via the charging interface (140).

6. The battery charging station (110) of any one of the preceding claims, wherein the health status data (276, 412) indicates an operating condition of the battery system (160);
wherein the operating condition of the battery system (160) includes one or more of: an electrical voltage, an electrical current, an electrical power, and/or a temperature of the battery system (160).

7. The battery charging station (110) of any one of claims 1 to 5, wherein the health status data (276, 412) indicates a module-specific operating condition of a subject battery module (512-1) of the battery system (160) that contains a plurality of battery modules (518-1);
wherein the module-specific operating condition of the battery system (160) includes one or more of: an electrical voltage, an electrical current, an electrical power, and/or a temperature of the subject battery module (512-1),
said first condition (318, 426) being a first module-specific condition associated with the subject battery module (512-1), and said second condition (320, 428) being a second module-specific condition associated with the subject battery module (512-1).

8. The battery charging station (110) of any one of the preceding claims, wherein the control system (134) is further configured to:
determine one or more of a platform type (266) of the mobile platform (112) and/or a protocol (268) associated with reporting of the health status data (276, 412) by the mobile platform (112) based communications data received from the mobile platform (112) over the wireless communications link (180) via the wireless interface (150); and
retrieve and execute a subject program (271) from a plurality of available programs based on the platform type (266) and/or the protocol (268);
wherein the first condition (318, 426) and the second condition (320, 428) are defined by the subject program (271).

9. A computer-implemented method (200) performed by a computing system (220, 900) integrated with a control system (134) of a battery charging station (110), the method (200) comprising:
receiving a charging request (244) for the battery charging station (110) to initiate a battery charging operation (331) for a battery system (160) of a mobile platform (112);
establishing a wireless communications link (180) between the battery charging station (110) and the mobile platform (112) via a wireless interface (150) of the battery charging station (110);
receiving health status data (276, 412) for the battery system (160) from the mobile platform (112) over the wireless communications link (180) via the wireless interface (150) of the battery charging station (110);
responsive to the health status data (276, 412) satisfying a first condition (318, 426), enabling charging of the battery system (160) of the mobile platform (112) via a charging interface (140) of the battery charging station (110); and
responsive to the health status data (276, 412) satisfying a second condition (320, 428) indicating a fault of the battery system (160), disabling charging of the battery system (160) of the mobile platform (112) via the charging interface (140) of the battery charging station (110).

10. The method (200) of claim 9, further comprising:
responsive to the health status data (276, 412) satisfying the second condition (320, 428) indicating the fault of the battery system (160), performing one or more additional remedial operations (324, 326, 328) that include:
sending a message (324) to emergency services infrastructure (118) over a communications network (114);
sending a message (326) to maintenance services infrastructure (120) over the communications network (114); and/or
activating a fire suppression system (124).

11. The method (200) of claim 9 or 10, wherein the health status data (276, 412) for the battery system (160) includes initial health status data (276) received prior to initiating charging of the battery system (160) of the mobile platform (112) via the charging interface (140); and
wherein the method (200) further comprises:
enabling charging of the battery system (160) of the mobile platform (112) via the charging interface (140) responsive to the health status data (276, 412) satisfying the first condition (318, 426) by initiating charging of the battery system (160) responsive to the charging request (244); and
disabling charging of the battery system (160) of the mobile platform (112) via the charging interface (140) responsive to the health status data (276, 412) satisfying the second condition (320, 428) by denying the charging request (244).

12. The method (200) of any one of claims 9 to 11, wherein the health status data (276, 412) for the battery system (160) includes operational health status data (412) received while charging the battery system (160) of the mobile platform (112) via the charging interface (140); and
wherein the method (200) further comprises:
enabling charging of the battery system (160) of the mobile platform (112) via the charging interface (140) responsive to the health status data (276, 412) satisfying the first condition (318, 426) by continuing charging of the battery system (160) via the charging interface (140); and
disabling charging of the battery system (160) of the mobile platform (112) via the charging interface (140) responsive to the health status data (276, 412) satisfying the second condition (320, 428) by discontinuing charging of the battery system (160) via the charging interface (140).

13. The method (200) of any one of claims 9 to 11, wherein the health status data (276, 412) indicates a module-specific operating condition of a subject battery module (512-1) of the battery system (160) that contains a plurality of battery modules (518-1);
wherein the module-specific operating condition of the battery system (160) includes one or more of: an electrical voltage, an electrical current, an electrical power, and/or a temperature of the subject battery module (512-1);
wherein the first condition (318, 426) is a first module-specific condition associated with the subject battery module (512-1); and
wherein the second condition (320, 428) is a second module-specific condition associated with the subject battery module (512-1).

14. The method (200) of any one of claims 9 to 13, further comprising:
determining one or more of a platform type (266) of the mobile platform (112) and/or a protocol (268) associated with reporting of the health status data (276, 412) by the mobile platform (112) based on communications data received from the mobile platform (112) over the wireless communications link (180) via the wireless interface (150); and
retrieving and executing a subject program (271) from a plurality of available programs based on the platform type (266) and/or the protocol (268);
wherein the first condition (318, 426) and the second condition (320, 428) are defined by the subject program (271).

15. A computing system (900) for controlling operation of a battery charging station (110), the computing system (900) comprising:
a logic machine (910);
a data storage machine (912) having instructions (920) stored thereon executable by the logic machine (910) to perform the method (200) according to any of claims 9 to 14.
